# EUROPEAN PATENT APPLICATION

(11) **EP 4 344 984 A1**
(43) Date of publication of application: **03.04.2024**
(21) Application number: 23200120.6
(22) Date of filing: 27.09.2023
(51) Int. Cl.: B62D 21/11, B62D 21/15

(54) **BODY FOR VEHICLE**

(30) Priority: 29.09.2022 KR 20220124411
(71) Applicant: Dong Hee Industrial Co., Ltd., Ulsan 44784 (KR)
(72) Inventor: SIM, Hyeon Seok, 16648 Suwon-si, Gyeonggi-do (KR)
(74) Representative: BCKIP Part mbB

(57) **Abstract**

The present invention relates to a body for a vehicle fixed between side members to reinforce the stiffness and durability of a subframe, and in the present invention, disclosed is a body for a vehicle including a subframe in which front and rear cross members are provided in a width direction of the vehicle and side members are provided at both sides of the front and rear cross members in a longitudinal direction of the vehicle, and a center cross reinforcing member assembled in a structure in which a plurality of assembling parts are assembled between the front and rear cross members in the width direction of the vehicle and fixed to the side members positioned at both sides and movements between the assembling parts in a third-axis direction are restricted.

## Description

### BACKGROUND OF THE INVENTION

### Field of the Invention

The present invention relates to a body for a vehicle fixed between side members to reinforce the stiffness and durability of a subframe.

### Description of the Related Art

A method of assembling a suspension on a separate frame without being directly installed on a body and connecting the suspension to the body is called a subframe method.

When a suspension arm, a link, and the like are installed directly on the body, the stiffness of the body affects the stiffness of the suspension, but when assembled using a subframe, the subframe functions to allow a load to be easily transmitted while increasing the structural stiffness of a vehicle.

The subframe has a structure with a quadrangular shape formed by a combination of four members by installing front and rear cross members in a width direction of the vehicle and installing two side members at both sides in a longitudinal direction of the vehicle.

Among these members, the side member is an important skeletal member for supporting the body and needs to sufficiently secure the strength and stiffness required by the subframe.

The matters explained as the background art are for the purpose of enhancing the understanding of the background of the present invention and should not be taken as acknowledging that they correspond to the related art already known to those skilled in the art.

### Documents of Related Art

(Patent Document 1) KR 10-2011-0062110 A
(Patent Document 2) KR 10-1458702 B

### SUMMARY OF THE INVENTION

The present invention has been made in efforts to solve the above problem and is directed to providing a body for a vehicle fixed between side members to reinforce stiffness and durability of a subframe.

A configuration of the present invention for achieving the object includes a subframe in which front and rear cross members are provided in a width direction of the vehicle and side members are provided at both sides of the front and rear cross members in a longitudinal direction of the vehicle, and a center cross reinforcing member assembled in a structure in which a plurality of assembling parts are assembled between the front and rear cross members in the width direction of the vehicle and fixed to the side members positioned at both sides and movements between the assembling parts in a third-axis direction are restricted.

The center cross reinforcing member may include side assembling parts fixed to the side members positioned at both sides, and a center assembling part assembled between the side assembling parts positioned at both sides.

An insertion groove having a closed cross-sectional shape may be formed in an end portion of the assembling part, and an end portion of the other assembling part may be inserted into the insertion groove in a surrounded shape.

The assembling part and the other assembling part may be bonded by welding along a boundary in which the assembling part and the other assembling part are in contact with each other.

A penetration space may be formed along an edge of the insertion groove that forms a boundary with the other assembling part.

The other assembling part may be in close contact with an inner end of the insertion groove.

A portion of the assembling part surrounding the other assembling part may be formed in a shape of a rib, which is branched severally, and the ribs and the other assembling part may be bonded by welding along a boundary in which the ribs and the other assembling part are in contact with each other.

The ribs may be formed in a direction perpendicular to a left and right longitudinal direction of the other assembling part.

The ribs may be formed parallel to each other.

Through the above configuration, according to the present invention, by fixing a side assembling part in the shape surrounding a center assembling part to increase the contact area between the side assembling part and the center assembling part and physically restrict the movements of the side assembling part and the center assembling part in the third-axis direction, it is possible to increase the fixing strength of the center cross reinforcing member and secure the stiffness and durability of the subframe.

Furthermore, by expanding the boundary portion between the side assembling part and the center assembling part due to the structure in which the side assembling part is press-fitted in the shape surrounding the center assembling part and the rib, which is branched severally, is in contact with the center assembling part, it is possible to increase the welding area and increase the fixing forces between the assembling parts.

### BRIEF DESCRIPTION OF THE DRAWINGS

FIG. 1 is a view illustrating a shape of a subframe according to the present invention.
FIG. 2 is an enlarged view illustrating a coupled portion of a center assembling part and side assembling parts of a center cross reinforcing member according to the present invention.
FIG. 3 is a view for describing a configuration in which welding is performed along an insertion groove according to the present invention.

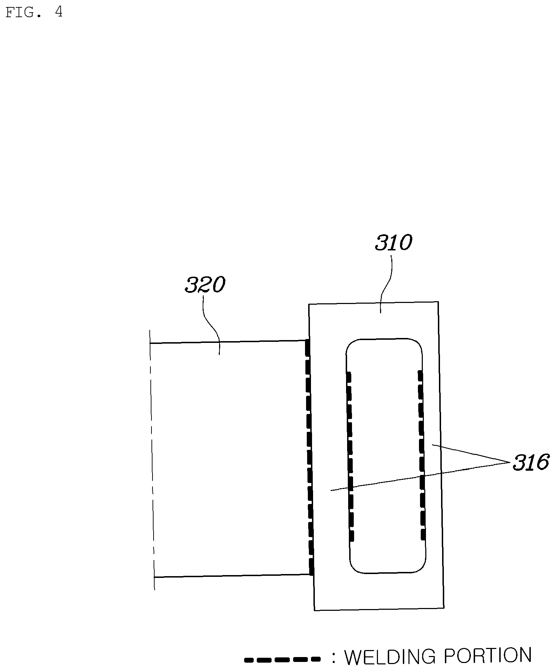

FIG. 4 is a view for describing a configuration in which ribs and the center assembling part are welded according to the present invention.

### DETAILED DESCRIPTION OF THE INVENTION

Hereinafter, embodiments disclosed in this specification will be described in detail with reference to the accompanying drawings, and the same or similar components are denoted by the same reference numerals regardless of the drawing symbols, and overlapping descriptions thereof will be omitted.

The suffixes "module" and "unit" for components used in the following description are given or used interchangeably in consideration of ease of writing the specification and do not have meanings or roles that are distinct from each other by themselves.

In describing the embodiments disclosed in this specification, when it is determined that a detailed description of a related known technology may obscure the gist of the embodiments disclosed in this specification, a detailed description thereof will be omitted. In addition, the accompanying drawings are only for easy understanding of the embodiments disclosed in this specification, and it should be understood that the technical spirit disclosed in this specification is not limited by the accompanying drawings, and all changes, equivalents, or substitutes included in the spirit and technical scope of the present invention are included in the accompanying drawings.

Terms including ordinal numbers such as first or second may be used to describe various components, but the components are not limited by the terms. The terms are used only for the purpose of distinguishing one component from another.

When a first component is described as being "connected" or "coupled" to a second component, it should be understood that the first component may be directly connected or coupled to the second component or a third component may be present therebetween. On the other hand, when the first component is described as being "directly connected" or "directly coupled" to the second component, it should be understood that the third component is not present therebetween.

The singular expression includes the plural expression unless the context clearly dictates otherwise.

In the specification, it should be understood that terms such as "comprise" or "have" are intended to specify that a feature, a number, a step, an operation, a component, a part, or a combination thereof described in the specification is present, but do not preclude the possibility of the presence or addition of one or more other features, numbers, steps, operations, components, parts, or combinations thereof.

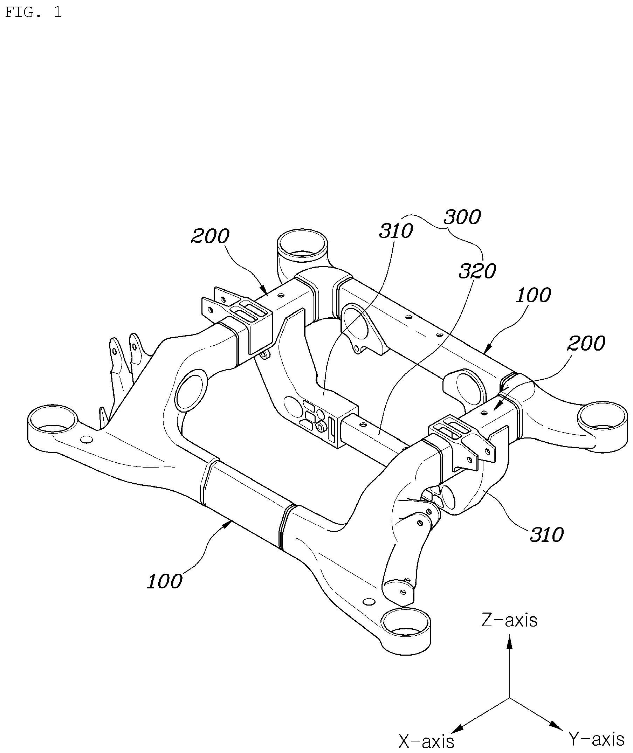

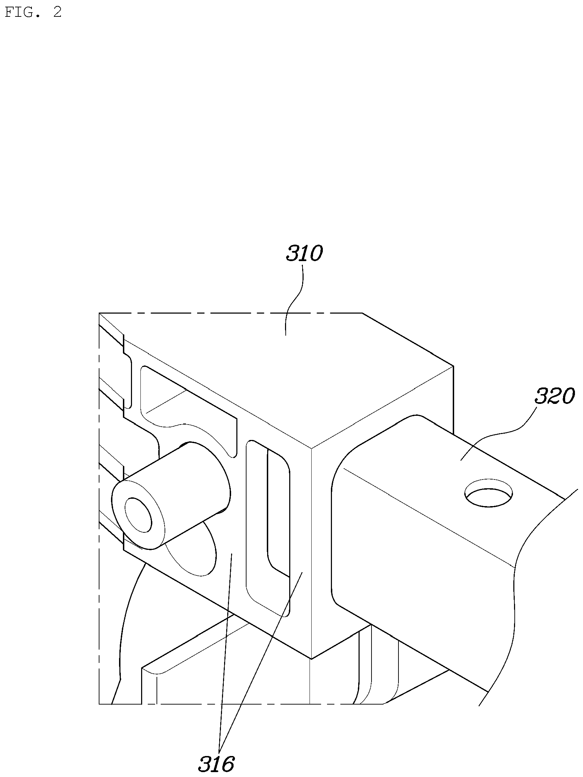

FIG. 1 is a view illustrating a shape of a subframe according to the present invention, and FIG. 2 is an enlarged view illustrating a coupled portion of a center assembling part 320 and side assembling parts 310 of a center cross reinforcing member 300 according to the present invention.

Referring to the drawings, a body for a vehicle includes a subframe in which front and rear cross members 100 are provided in a width direction of the vehicle and side members 200 are provided at both sides of the front and rear cross members 100 in a longitudinal direction of the vehicle, and a center cross reinforcing member 300 assembled in a structure in which a plurality of assembling parts are assembled between the front and rear cross members 100 in the width direction of the vehicle and fixed to the side members 200 positioned at both sides and movements between the assembling parts in a third-axis direction are restricted.

Specifically, the subframe having a quadrangular structure is formed by forming each of the front and rear cross members 100 in a lateral width direction of the vehicle and forming the side member 200 at each of left and right sides of the front and rear cross members 100 in the longitudinal direction of the vehicle.

In addition, the center cross reinforcing member 300 is assembled to the left and right sides between the side members 200 positioned at both sides, and the center cross reinforcing member 300 is assembled by connecting three assembling parts in series.

In particular, relative movements of portions connected between the assembling parts are restricted with respect to an X-axis in a front-rear direction, a Y-axis in a left-right direction, and a Z-axis in a vertical direction.

Therefore, by physically restricting the relative movements between the assembling parts, it is possible to implement an inherent stiffness reinforcing function of the center cross reinforcing member 300 and increase a fixing strength of the center cross reinforcing member 300 with respect to the side member 200, thereby securing the stiffness and durability of the subframe.

In addition, the center cross reinforcing member 300 includes the side assembling parts 310 fixed to the side members 200 positioned at both sides, and the center assembling part 320 assembled between the side assembling parts 310 positioned at both sides.

For example, the side assembling part 310 is formed in a shape in which a middle portion is bent, has one side formed in a direction of moving up at a certain slope toward the side member 200 around the bent portion, and has the other side formed in parallel toward a center of the subframe.

In addition, one ends of the side assembling parts 310 facing the side members 200 are formed in a "U"-shaped cross-sectional shape and fixed in a shape that covers left and right side surfaces and lower surfaces of the side members 200 positioned at both sides.

In addition, the other ends of the side assembling parts 310 facing the center of the subframe are formed in a shape that corresponds to shapes of both ends of the center assembling part 320 so that the center assembling part 320 is assembled between the side assembling parts 310 positioned at both sides.

FIG. 2 is an enlarged view illustrating a coupled portion of the center assembling part 320 and the side assembling parts 310 of the center cross reinforcing member 300 according to the present invention.

Referring to the drawing, an insertion groove 312 having a closed cross-sectional shape may be formed in an end portion of the assembling part, and an end portion of the other assembling part may be inserted into the insertion groove 312 in a surrounded shape.

For example, the side assembling parts 310 and the center assembling part 320 may be extrusion-molded, and a length of the center cross reinforcing member 300 may be changed by changing a length of the center assembling part 320.

In particular, the insertion groove 312 having a quadrangular closed cross-sectional shape is formed in the end portion of the side assembling part 310.

In addition, both ends of the center assembling part 320 are formed in a shape of a pipe with a quadrangular cross-section corresponding to the insertion groove 312, and both ends of the center assembling part 320 are assembled by being press-fitted into the insertion groove 312.

Therefore, by restricting the movement of the center assembling part 320 with respect to the side assembling parts 310 in the third-axis direction, it is possible to increase fixing forces of the extrusion-molded assembling parts, thereby increasing the fixing strength of the center cross reinforcing member 300 and securing the stiffness and durability of the subframe.

In addition, according to the present invention, the assembling part and the other assembling part may be bonded by welding along a boundary in which the assembling part and the other assembling part are in contact with each other.

For example, since a boundary portion between the center assembling part 320 and the side assembling part 310 is expanded due to the structure in which the center assembling part 320 is press-fitted in a shape surrounded within the side assembling part 310, it is possible to increase a welding area, thereby increasing the fixing forces between the assembling parts.

Furthermore, a penetration space 314 may be formed along an edge of the insertion groove 312 that forms a boundary with the other assembling part.

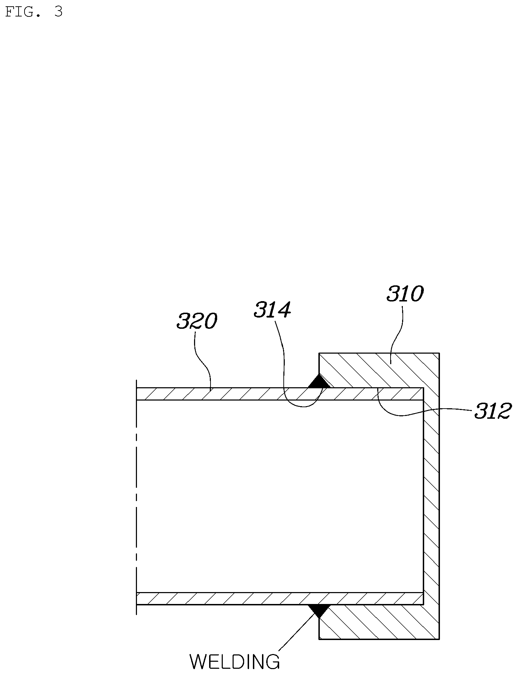

FIG. 3 is a view for describing a configuration in which welding is performed along the insertion groove 312 according to the present invention, and describing with reference to the drawing, since the side assembling part 310 is manufactured by extrusion-molding, the insertion groove 312 is formed through separate hole processing after extrusion processing.

Therefore, when the insertion groove 312 is processed, an edge of an opening of the insertion groove 312 is chamfered to form the penetration space 314.

Therefore, it is possible to increase the welding area between the center assembling part 320 and the side assembling parts 310, thereby increasing the fixing forces between the assembling parts.

In addition, according to the present invention, the other assembling part may in close contact with an inner end of the insertion groove 312.

For example, as illustrated in FIG. 3, since the end portion of the center assembling part 320 is press-fitted into the inner end of the insertion groove 312 formed in the side assembly part 310, it is possible to restrict relative movements between the center assembling part 320 and the side assembling parts 310 in a Y-axis direction, thereby increasing the fixing forces between the assembling parts.

In this case, welding is performed along the edge of the insertion groove 312 in a state in which the center assembling part 320 is fully pressed into the insertion groove 312 of the side assembling part 310.

In addition, according to the present invention, the portion of the assembling part surrounding the other assembling part may be formed in a shape of a rib 316, which is branched severally, and bonded by welding along a boundary in which the ribs 316 and the other assembling part are in contact with each other.

For example, the portion of the side assembling part 310 surrounding the end portion of the center assembling part 320 is formed in a partially hole-processed shape.

Therefore, the ribs 316 are formed in a branched shape at left and right sides based on a hole formed in the portion of the side assembling part 310, and thus formed in a shape in which an empty space is formed between the ribs 316.

Therefore, since each rib 316 is in contact with each of an outer surface of the center assembling part 320, it is possible to further increase a boundary region between the side assembling parts 310 and the center assembling part 320, thereby further increasing the welding area and increasing the fixing forces between the assembling parts.

As described above, by welding not only the edge of the insertion groove 312 surrounding the circumference of the center assembling part 320 but also an inner edge of the rib 316 covering a front surface and a rear surface of the center assembling part 320, the welding portion is evenly distributed to mitigate a phenomenon in which welding stress is concentrated on a specific portion.

In addition, the ribs 316 may be formed in a direction perpendicular to the left and right longitudinal directions of the other assembling part, and the ribs 316 may be formed parallel to each other.

For example, the ribs 316 may be formed on front surfaces and rear surfaces of the side assembling parts 310, which are in contact with the front surface and the rear surface of the center assembling part 320.

In addition, since each rib 316 is welded in a direction perpendicular to the longitudinal direction of the center assembling part 320 while formed in the direction perpendicular to the longitudinal direction, it is possible to bonding strengths of the ribs 316 in the longitudinal direction of the center assembling part 320.

Therefore, by stably restricting the relative movements of the center assembling part 320 and the side assembling parts 310 in the longitudinal direction, it is possible to increase the fixing strength of the center cross reinforcing member 300, thereby securing the stiffness and durability of the subframe.

Meanwhile, although only the above-described specific examples have been described in detail in the present invention, it is apparent to those skilled in the art that various changes and modifications are possible within the technical scope of the present invention, and it goes without saying that these changes and modifications fall within the scope of the appended claims.

### DESCRIPTION OF REFERENCE NUMERALS

| | | | |
|---|---|---|---|
| 100: | cross member | 200: | side member |
| 300: | center cross reinforcing member | | |
| 310: | side assembling part | 312: | insertion groove |
| 314: | penetration space | 316: | rib |
| 320: | center assembling part | | |

## Claims

1. A body for a vehicle, comprising:
a subframe in which front and rear cross members are provided in a width direction of the vehicle and side members are provided at both sides of the front and rear cross members in a longitudinal direction of the vehicle; and
a center cross reinforcing member assembled in a structure in which a plurality of assembling parts is assembled between the front and rear cross members in the width direction of the vehicle and fixed to the side members positioned at both sides and movements between the assembling parts in a third-axis direction are restricted.

2. The body of claim 1, wherein the center cross reinforcing member includes:
side assembling parts fixed to the side members positioned at both sides; and
a center assembling part assembled between the side assembling parts positioned at both sides.

3. The body of claim 1 or claim 2, wherein an insertion groove having a closed cross-sectional shape is formed in an end portion of the assembling part, and
an end portion of the other assembling part is inserted into the insertion groove in a surrounded shape.

4. The body of claim 3, wherein the assembling part and the other assembling part are bonded by welding along a boundary in which the assembling part and the other assembling part are in contact with each other.

5. The body of claim 3, wherein a penetration space is formed along an edge of the insertion groove that forms a boundary with the other assembling part.

6. The body of claim 3, wherein the other assembling part is in close contact with an inner end of the insertion groove.

7. The body of claim 3, wherein a portion of the assembling part surrounding the other assembling part is formed in a shape of a rib, which is branched severally, and the ribs and the other assembling part are bonded by welding along a boundary in which the ribs and the other assembling part are in contact with each other.

8. The body of claim 7, wherein the ribs are formed in a direction perpendicular to a left and right longitudinal direction of the other assembling part.

9. The body of claim 7, wherein the ribs are formed parallel to each other.
